# EUROPEAN PATENT APPLICATION

(11) **EP 2 587 879 A1**
(43) Date of publication of application: **01.05.2013**
(21) Application number: 13152683.2
(22) Date of filing: 06.09.2007
(51) Int. Cl.: H04W 72/04

(54) **Method and system for de-assigment of resouces in a wirless communication system**

(30) Priority: 08.09.2006 US 843324 P; 04.09.2007 US 849508
(62) Divisional of application: 07841957.9
(71) Applicant: Qualcomm Incorporated, San Diego CA 91121-1714 (US)
(72) Inventor: Gorokhov, Alexel, San Diego, CA 92130 (US); Khandekar, Aamod, San Diego, CA 92122 (US); Agrawal, Avneesh, San DIego, CA 92127 (US)
(74) Representative: Loveless, Ian Mark

(57) **Abstract**

Systems and methods are disclosed that facilitate dynamically de-assigning resources and communication channels for transmitting messages indicative of resource de-assigning. Systems and method for generating and interpreting de-assignment messages are also provided.

## Description

This application claims the benefit of United States Provisional Patent Application Serial No. 60/843,324, filed September 8, 2006, entitled "METHOD AND SYSTEM FOR DEASSIGNMENT OF RESOURCES IN A WIRELESS COMMUNICATION NETWORK,". In addition, this application is a continuation in part of United States Patent Application Serial No. 11/369,494, filed March 7, 2006, entitled "METHOD AND SYSTEM FOR DEASSIGNMENT OF RESOURCES IN A WIRELESS COMMUNICATION SYSTEM,".

### BACKGROUND

### I. Field

The present disclosure relates generally to wireless communication, and more particularly to dynamically managing network resources by utilizing reserved de-assignment resources.

### II. Background

Wireless networking systems have become a prevalent means by which a majority of people worldwide have come to communicate. Wireless communication devices have become smaller and more powerful in order to meet consumer needs and to improve portability and convenience. The increase in processing power in mobiles devices, such as cellular telephones, has led to an increase in demands on wireless network transmission systems. Such systems typically are not as easily updated as the cellular devices that communicate there over. As mobile device capabilities expand, it can be difficult to maintain an older wireless network system in a manner that facilitates fully exploiting new and improved wireless device capabilities.

For example, it can be expensive (*e.g*., bit-wise,...) to precisely describe channel assignments in a wireless networking environment. Such can be especially true when users (*e.g*., mobile devices) are not required to be aware of system resource assignments to other users of the wireless system. In such cases, assignments of system resources, such as broadcast channels and the like can require updating on virtually every broadcast cycle in order to provide each user with adequate bandwidth and/or networking power, which can tax the wireless network system and expedite realization of network limitations. Additionally, by requiring such continuous updates and/or complete reassignment messages to be transmitted to users so frequently, such conventional methods of system resource allocation can require expensive and high powered communication components (*e.g*., transceivers, processors, ...) just to meet system demand. Multiple-access communication systems generally employ methods of assigning system resources to the individual users of the system. When such assignments change rapidly over time, system overhead required just to manage the assignments can become a significant portion of the overall system capacity. When assignments are sent using messages that constrain the assignment of resource blocks to a subset of the total possible permutations of blocks, assignment expense can be reduced somewhat, but by definition, assignments are constrained. This means that the network cannot partition the total bandwidth resource among users in any way it desires. The network is constrained to assign and de-assign only those resources that can be indexed by the available bits.

Further, in a system where assignments are "sticky" (*e*.*g*., an assignment persists over time for as long as data is available to transmit rather than having a deterministic expiration time), it can be difficult to formulate constrained de-assignment messages that address instantaneous available resources. The set of available resources changes from frame to frame, therefore, "instantaneous available resource" refers to the set of resources that are available in any given frame.

In view of at least the above, a need exists for a system and/or methodology for improving de-assignment notification and reducing overhead in wireless network systems. WO 98/48581 describes de-allocation at physical channels in a general packet radio service. A RLC/MAC control message is defined which allows for physical channel de-allocation which enables the interruption of a packet switched data transmission for the rapid de-allocation of a channel occupied by that transmission.

### SUMMARY

The following presents a simplified summary of the disclosed aspects in order to provide a basic understanding of such aspects. This summary is not an extensive overview of all contemplated aspects, and is intended to neither identify key or critical elements nor delineate the scope of such aspects. Its sole purpose is to present some concepts of the disclosed aspects in a simplified form as a prelude to the more detailed description that is presented later.

According to an aspect, a method comprises determining whether to de-assign one or more resources assigned to an access terminal for at least two frames and if de-assignment is determined, then generating a message indicative of a request to de-assign resources. The method also includes transmitting the message on a reserved de-assignment channel.

According to yet another aspect, an apparatus can comprise means for determining whether to de-assign one or more resources assigned to an access terminal for at least two frames and means for, if de-assignment is determined, generating a message indicative of a request to de-assign resources. The apparatus may further comprise means for assigning transmission of the message on a reserved de-assignment channel.

Yet another aspect relates to a computer-readable medium comprising code for causing a computer to determine whether to de-assign one or more resources assigned to an access terminal for at least two frames and code for causing a computer to generate a message indicative of a request to de-assign resources, if de-assignment is determined. The medium also includes code for causing a computer to transmit the message on a reserved de-assignment channel.

A further aspect is provided for by an integrated circuit that executes instructions for generating de-assignment messages for a wireless communication device. The instructions include determining whether to de-assign one or more resources assigned to an access terminal for at least two frames and if de-assignment is determined, then generating a message indicative of a request to de-assign resources. The instructions also include transmitting the message on a reserved de-assignment channel.

According to another aspect, a wireless communication apparatus comprises a processor configured to determine whether to de-assign one or more resources assigned to an access terminal, generate a message indicative of a request to de-assign resources, and instruct transmission of the message on reserved de-assignment channel resources. The processor may be coupled to a memory coupled to the processor.

According to an aspect, a method comprises determining whether a de-assignment message, corresponding to a request to de-assign one or more resources assigned to an access terminal for at least two frames, has been received over communication channel resources reserved for de-assignment messages and if the message has been received, determining the resources that are to be de-assigned.

According to yet another aspect, an apparatus can comprise means for determining whether a de-assignment message, corresponding to a request to de-assign one or more resources assigned to an access terminal for at least two frames, has been received over communication channel resources reserved for de-assignment messages, and means for, if the message has been received, determining the resources that are to be de-assigned.

Yet another aspect relates to a computer-readable medium including code for causing a computer to determine whether a de-assignment message, corresponding to a request to de-assign one or more resources assigned to an access terminal for at least two frames, has been received over communication channel resources reserved for de-assignment messages, and code for causing a computer to determining the resources that are to be de-assigned if the message has been received.

Another related aspect is provided for by an integrated circuit that executes instructions for interpreting de-assignment messages received over a wireless communication channel. The instructions include determining whether a de-assignment message, corresponding to a request to de-assign one or more resources assigned to an access terminal for at least two frames, has been received over communication channel resources reserved for de-assignment messages and if the message has been received, determining the resources that are to be de-assigned.

According to another aspect, a wireless communication apparatus comprises a processor configured to determine whether a de-assignment message, corresponding to a request to de-assign one or more resources assigned to an access terminal for at least two frames, has been received over communication channel resources reserved for de-assignment messages. The apparatus also comprises a memory coupled to the processor.

To the accomplishment of the foregoing and related ends, one or more aspects include the features hereinafter fully described and particularly pointed out in the claims. The following description and the annexed drawings set forth in detail certain illustrative aspects of the disclosed aspects. These aspects are indicative, however, of merely a few of the various ways in which the principles of various aspects may be employed. Further, the disclosed aspects are intended to include all such aspects and their equivalents.

### BRIEF DESCRIPTION OF THE DRAWINGS

FIG. 1 illustrates a wireless multiple-access communication system in accordance with various aspects set forth herein.

FIG. 2A is a flow diagram illustrating aspects of a method for interpreting resource assignment messages in accordance with various aspects described herein.

FIG. 2B is a block diagram illustrating aspects of an apparatus for interpreting resource assignment messages in accordance with various aspects described herein.

FIG. 3A is a flow diagram illustrating aspects of another method for interpreting resource assignment messages in accordance with various aspects described herein.

FIG. 3B is a block diagram illustrating aspects of another apparatus for interpreting resource assignment messages in accordance with various aspects described herein.

FIG. 4 is a block diagram illustrating an access terminal configured for receiving acknowledgement and/or de-assignment messages in accordance with various aspects.

FIG. 5A is a flow diagram illustrating aspects of a method for signaling resource de-assignments in accordance with various aspects.

FIG. 5B is a block diagram illustrating aspects of an apparatus for providing resources de-assignments in accordance with an aspect.

FIG. 6 is a block diagram illustrating an access point configured for determining de-assignment needs, generating de-assignment and/or acknowledgement messages and transmitting the de-assignment/acknowledgement messages to designated access terminal, in accordance with various aspects.

FIG. 7A illustrates aspects of a signaling transmission scheme for a de-assignment channel in accordance with various aspects described herein.

FIG. 7B illustrates aspects of a subcarrier set that can be utilized in accordance with various aspects described herein.

FIG. 8 illustrates aspects of a binary channel tree including logical resources for a de-assignment channel in accordance with various aspects described herein.

FIGS. 9A and 9B are block diagrams illustrating aspects of communication messages transmitted on a de-assignment channel in accordance with various aspects.

FIG. 10 illustrates aspects of a binary channel tree including logical resources for interpreting de-assignment messages in accordance with various aspects described herein.

FIG. 11A is a state diagram illustrating an aspect of an acknowledgement message with de-assignment indications that may be transmitted on an acknowledgement channel, according to various aspects.

FIG. 11B is a state diagram illustrating an aspect of a start-of-packet (SoP) message with de-assignment indications that may be transmitted on a SoP indication channel, according to various aspects.

FIG. 12 is a block diagram illustrating an example wireless communication system in which one or more aspects described herein may function.

FIG. 13 is a block diagram of a system that coordinates generation and transmission of acquisition information in accordance with various aspects.

FIG. 14 is a block diagram of a system that coordinates signal acquisition in a wireless communication environment in accordance with various aspects.

### DETAILED DESCRIPTION

Various aspects are now described with reference to the drawings, wherein like reference numerals are used to refer to like elements throughout. In the following description, for purposes of explanation, numerous specific details are set forth in order to provide a thorough understanding of one or more aspects. It may be evident, however, that such aspect(s) may be practiced without these specific details. In other instances, well-known structures and devices are shown in block diagram form in order to facilitate describing one or more aspects.

As used in this application, the terms "component," "module," "system," and the like are intended to refer to a computer-related entity, either hardware, firmware, a combination of hardware and software, software, or software in execution. For example, a component may be, but is not limited to being, a process running on a processor, an integrated circuit, a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets (*e.g*., data from one component interacting with another component in a local system, distributed system, and/or across a network, such as the Internet, with other systems by way of the signal).

Furthermore, various aspects are described herein in connection with an access terminal and/or an access point. An access terminal may refer to a device providing voice and/or data connectivity to a user. An access wireless terminal may be connected to a computing device such as a laptop computer or desktop computer, or it may be a self-contained device such as a cellular telephone. An access terminal can also be called a system, a subscriber unit, a subscriber station, mobile station, mobile, remote station, remote terminal, a wireless access point, wireless terminal, user terminal, user agent, user device, or user equipment. A wireless terminal may be a subscriber station, wireless device, cellular telephone, PCS telephone, cordless telephone, a Session Initiation Protocol (SIP) phone, a wireless local loop (WLL) station, a personal digital assistant (PDA), a handheld device having wireless connection capability, or other processing device connected to a wireless modem. An access point, otherwise referred to as a base station or base station controller (BSC), may refer to a device in an access network that communicates over the air-interface, through one or more sectors, with wireless terminals. The access point may act as a router between the wireless terminal and the rest of the access network, which may include an Internet Protocol (IP) network, by converting received air-interface frames to IP packets. The access point also coordinates management of attributes for the air interface.

Moreover, various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (*e.g*., hard disk, floppy disk, magnetic strips...), optical disks (*e.g*., compact disk (CD), digital versatile disk (DVD)...), smart cards, and flash memory devices (*e.g*., card, stick, key drive...), and integrated circuits such as read-only memories, programmable read-only memories, and electrically erasable programmable read-only memories.

Various aspects will be presented in terms of systems that may include a number of devices, components, modules, and the like. It is to be understood and appreciated that the various systems may include additional devices, components, modules, *etc.* and/or may not include all of the devices, components, modules *etc.* discussed in connection with the figures. A combination of these approaches may also be used.

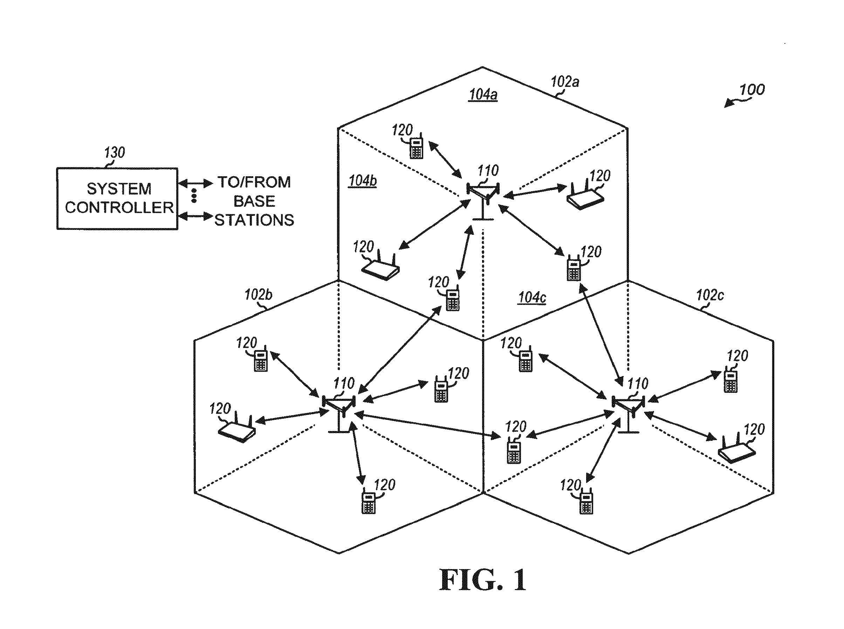

Referring now to the drawings, **Fig. 1** is an illustration of a wireless multiple-access communication system 100 in accordance with various aspects. In one example, the wireless multiple-access communication system 100 includes multiple base stations 110 and multiple terminals 120. Further, one or more base stations 110 can communicate with one or more terminals 120. By way of non-limiting example, a base station 110 can be an access point, a Node B, and/or another appropriate network entity. Each base station 110 provides communication coverage for a particular geographic area 102a-c. As used herein and generally in the art, the term "cell" can refer to a base station 110 and/or its coverage area 102 depending on the context in which the term is used.

To improve system capacity, the coverage area 102 corresponding to a base station 110 can be partitioned into multiple smaller areas (*e.g*., areas 104a, 104b, and 104c). Each of the smaller areas 104a, 104b, and 104c can be served by a respective base transceiver subsystem (BTS, not shown). As used herein and generally in the art, the term "sector" can refer to a BTS and/or its coverage area depending on the context in which the term is used. In one example, sectors 104 in a cell 102 can be formed by groups of antennas (not shown) at base station 110, where each group of antennas is responsible for communication with terminals 120 in a portion of the cell 102. For example, a base station 110 serving cell 102a can have a first antenna group corresponding to sector 104a, a second antenna group corresponding to sector 104b, and a third antenna group corresponding to sector 104c. However, it should be appreciated that the various aspects disclosed herein can be used in a system having sectorized and/or unsectorized cells. Further, it should be appreciated that all suitable wireless communication networks having any number of sectorized and/or unsectorized cells are intended to fall within the scope of the hereto appended claims. For simplicity, the term "base station" as used herein can refer both to a station that serves a sector as well as a station that serves a cell.

In accordance with one aspect, terminals 120 can be dispersed throughout the system 100. Each terminal 120 can be stationary or mobile. By way of non-limiting example, a terminal 120 can be an access terminal (AT), a mobile station, user equipment, a subscriber station, and/or another appropriate network entity. A terminal 120 can be a wireless device, a cellular phone, a personal digital assistant (PDA), a wireless modem, a handheld device, or another appropriate device. Further, a terminal 120 can communicate with any number of base stations 110 or no base stations 110 at any given moment.

In another example, the system 100 can utilize a centralized architecture by employing a system controller 130 that can be coupled to one or more base stations 110 and provide coordination and control for the base stations 110. In accordance with alternative aspects, system controller 130 can be a single network entity or a collection of network entities. Additionally, the system 100 can utilize a distributed architecture to allow the base stations 110 to communicate with each other as needed. In one example, system controller 130 can additionally include one or more connections to multiple networks. These networks can include the Internet, other packet based networks, and/or circuit switched voice networks that can provide information to and/or from terminals 120 in communication with one or more base stations 110 in system 100. In another example, system controller 130 can include or be coupled with a scheduler (not shown) that can schedule transmissions to and/or from terminals 120. Alternatively, the scheduler can reside in each individual cell 102, each sector 104, or a combination thereof.

In accordance with one aspect, each sector 104 can operate utilizing one or more of a plurality of carriers. In one example, each carrier is a portion of a larger bandwidth in which system 100 can operate. Alternatively, each carrier can be a portion of system bandwidth available for communication. In accordance with another aspect, a single sector 104 can utilize one or more carriers and can have multiple terminals 120 scheduled on each of the carriers utilized by the sector 104 during any given time interval (*e.g*., a physical layer frame or superframe).

Further, one or more terminals 120 can be scheduled on multiple carriers simultaneously according to the capabilities of each terminal 120. In one example, these capabilities can be included in pre-negotiated session information or be part of session information generated when a terminal 120 attempts to acquire communication. The session information can comprise a session identification token, which can be generated by querying a terminal 120 or determining the capabilities of a terminal 120 through its transmissions. Alternatively, these capabilities can be part of identification information transmitted by a terminal 120. Capabilities of a terminal 120 can also be established according to any other suitable approach.

In accordance with another aspect, acquisition signals can be provided on only one carrier for a given superframe. Further, the acquisition signals can be provided in a superframe preamble. The carrier used for the acquisition signals can vary with time based on, for example, a hop sequence. By reducing the acquisition signals to one carrier, the dispersion effect encountered for acquisition by terminals 120 can be reduced. Further, in an example where each base station 110 can have a different hop sequence or pattern, the likelihood of collision of the acquisition signals can be decreased, thus improving acquisition capability by terminals 120.

Additionally, it should be appreciated that while system 100 is illustrated as including physical sectors 104, other approaches can be utilized. For example, multiple fixed "beams" can be utilized that can each cover different areas of a cell 102 in frequency space in lieu of, or in combination with, physical sectors.

In certain aspects, assignments for communication resources for a given access terminal, for either, or both, the forward link and the reverse link, are defined as "sticky." As opposed to an assignment for a predetermined period of time, a "sticky assignment" persists or remains valid until a subsequent next assignment signal is received, until the terminal is otherwise notified, or until a predetermined event occurs (such as a packet error or the like).

According to one aspect, decremental assignments can be employed to partially subtract from, rather than completely de-assign, "sticky" assignments (*e.g*., assignments that are valid until a next assignment signal is received). The described decremental assignments can facilitate more robust system resource management, particularly with regard to instantaneously available system resources, as well as providing a more robust user experience at reduced overhead cost than can be achieved by conventional systems and/or methodologies.

Moreover, in order to provide for efficient decremental resource de-assignment, a channel (*e.g*., a predetermined resource) can be allocated for the transmission of de-assignment messages, whether complete or partial (*e.g*., decremental). In some aspects, the communication system resources can be physical resources such as subcarriers, OFDM (Orthogonal Frequency Division Multiplexing) symbols, or combinations of subcarriers and OFDM symbols. In other aspects, the communication system resources can correspond to logical resources that are subsequently assigned to physical resources, based upon a mapping scheme, frequency hopping algorithm, or some other approach. In certain aspects, the decision to de-assign resources can be based in part as to the types of resources, physical, logical, or the like, that are assigned.

In additional aspects, the resource de-assignments need not be decremental and can be complete de-assignments for one or more frames, superframes, or some number of OFDM symbols.

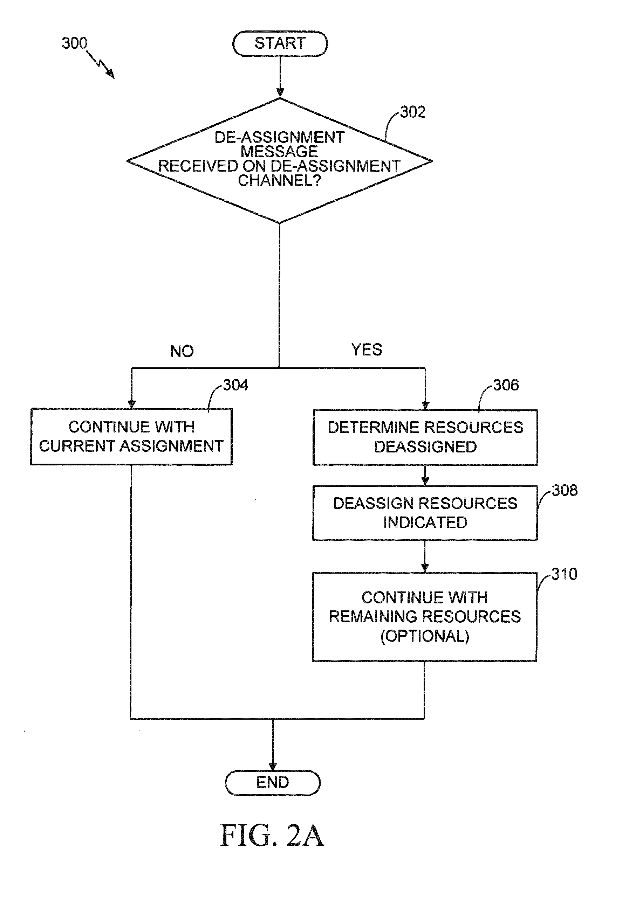

**Fig. 2A** illustrates a method 300 for interpreting resource assignment messages. It is to be appreciated that method 300 can be performed by, for example, an access terminal (*e.g*., a terminal 120) and/or any other appropriate network entity. At block 302, a determination is made as to whether a de-assignment message has been received on a de-assignment channel reserved for communication of de-assignment messages. At block 304, if a de-assignment message is not detected, the current assignment is maintained. Maintaining the current assignment until a de-assignment message is received is characteristic of the "sticky" network resource assignment described previously.

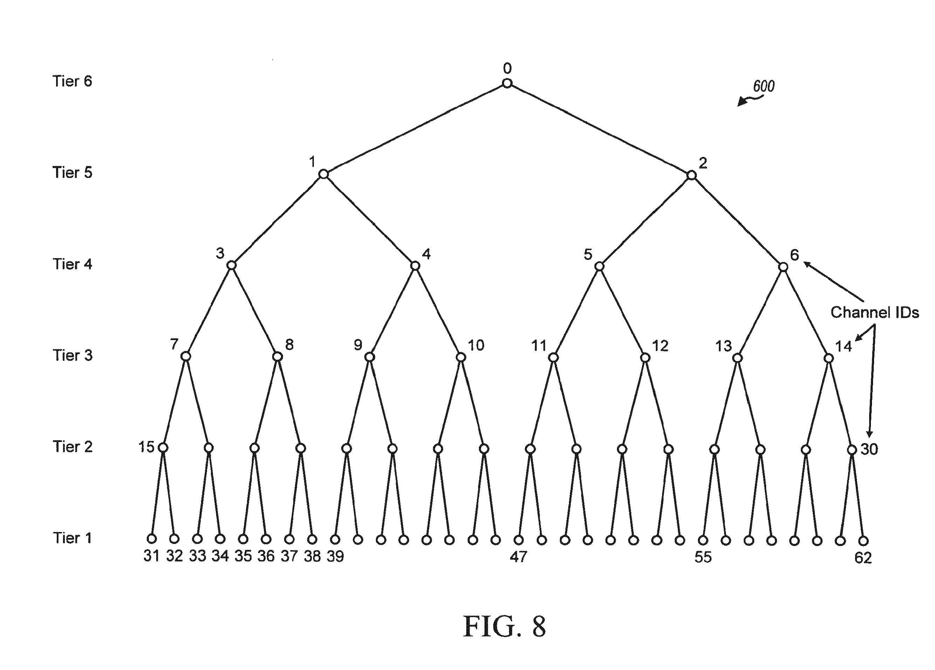

At block 306, if a de-assignment message has been received, a determination is made as to what resources are being de-assigned. Aspects of approaches to determining what resources are being de-assigned are depicted and discussed with respect to **Figs. 8-10****,** infra. At block 308, once the determination is made, the network resources that were indicated by the determination at block 306 are de-assigned and utilization of the indicated resources ceases. Finally, method 300 can optionally proceed to block 310, wherein network operation continues with resources that have not been de-assigned. As previously noted, in certain aspects the de-assignment message may be configured to de-assign all of the currently assigned network resources. In those instances in which all currently assigned network resources are de-assigned, no continual utilization of assigned network resources is realized. It should also be noted, as used herein, ceasing use of network resources may imply one or both of ceasing transmission of signals or ceasing of listening for, or attempting to demodulate, received signals on the network resources, such as network channels or the like.

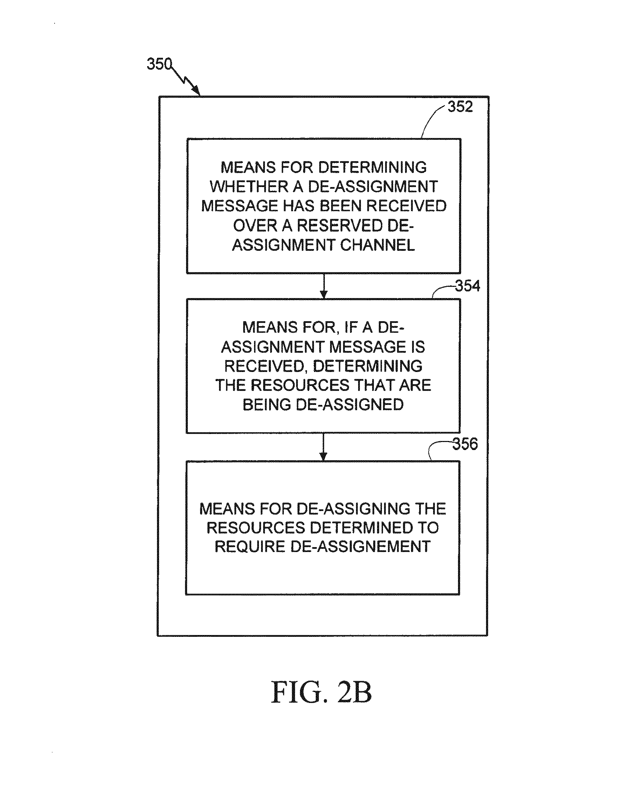

**Fig. 2B** illustrates an apparatus 350 for interpreting resource assignment messages. It is to be appreciated that apparatus 350 is represented as including functional blocks, which can be functional blocks that represent functions implemented by a processor, software, or combination thereof (*e.g*., firmware). Apparatus 350 can be implemented in a terminal (*e.g*., terminal 120) and/or another suitable network entity and can include means 352 for determining whether a de-assignment message has been received over a reserved de-assignment channel. Means 352 can be in communication with means 354 for, if a de-assignment message is received, determining the network resources that are being de-assigned. Additionally, the apparatus includes means 356, which are in communication with means 354, for de-assigning the network resources determined to require de-assignment.

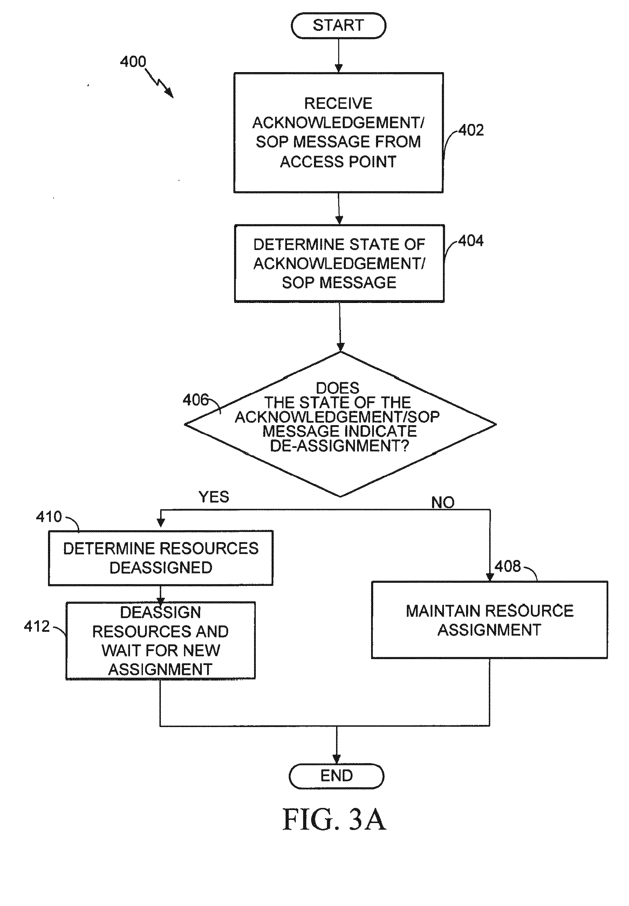

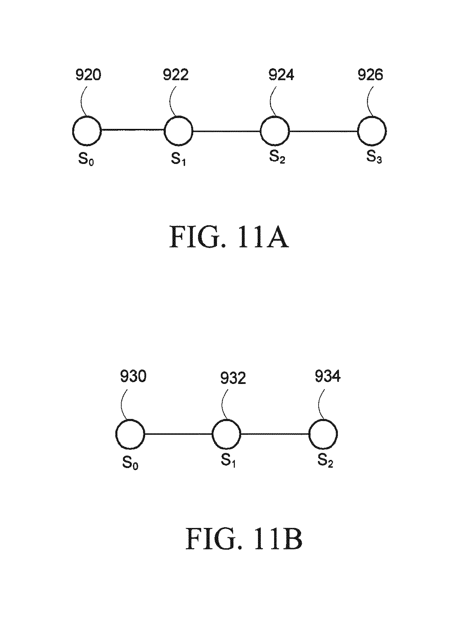

**Fig. 3A** illustrates another method 400 for interpreting resource assignment messages. It is to be appreciated that method 300 can be performed by, for example, an access terminal and/or any other appropriate network entity. At block 402, a determination is made as to whether an acknowledgement message or a start-of packet (SoP) message has been received on a channel reserved for communication of acknowledgement messages or SoP messages, respectively. At block 404, a state of the message is then determined. As used herein, a state may mean properties of the message such as value, power, timing, or some other criteria. According to aspects, the acknowledgement message may include one of four states; (1) an off state, e.g. {negative acknowledgement (NACK) and no de-assignment}; (2) an acknowledge state, e.g. {acknowledgement (ACK) and no de-assignment}; (3) an acknowledge and de-assign state; e.g. {ACK and de-assignment} and (4) a de-assign state, e.g. {NACK and de-assignment}. According to other aspects, the SoP message may include one of three states; (1) an off state, e.g. {no SoP}; (2) an SoP state; {SoP and no de-assignment}; (3) a de-assignment state, e.g. {no SoP and de-assignment}. Aspects of such states are depicted and discussed with respect to **Fig. 11A** and **11B****.**

At block 406, a determination is then made whether the state of the acknowledgement message or SoP message is indicative of a de-assignment. At block 408, if the state does not indicate de-assignment, then the currently assigned resources are maintained, such as characteristic of "sticky" assignment of network resources. If the state is indicative of de-assignment, then, at block 410, a determination is made as to what resources are being de-assigned. In certain aspects, an acknowledgement message and/or SoP message with de-assignment indicates a full de-assignment of all currently active network resources. At block 412, once the determination is made, an entity performing method 400 can de-assign (*e.g*., cease utilizing) the resources that have been de-assigned and, if less than all network resources have been de-assigned, continue utilizing the network resources that have not been de-assigned. As previously noted, as used herein, ceasing use of network resources may imply one or both of ceasing transmission of signals or ceasing of listening, or attempting to demodulate, received signals on the network resources.

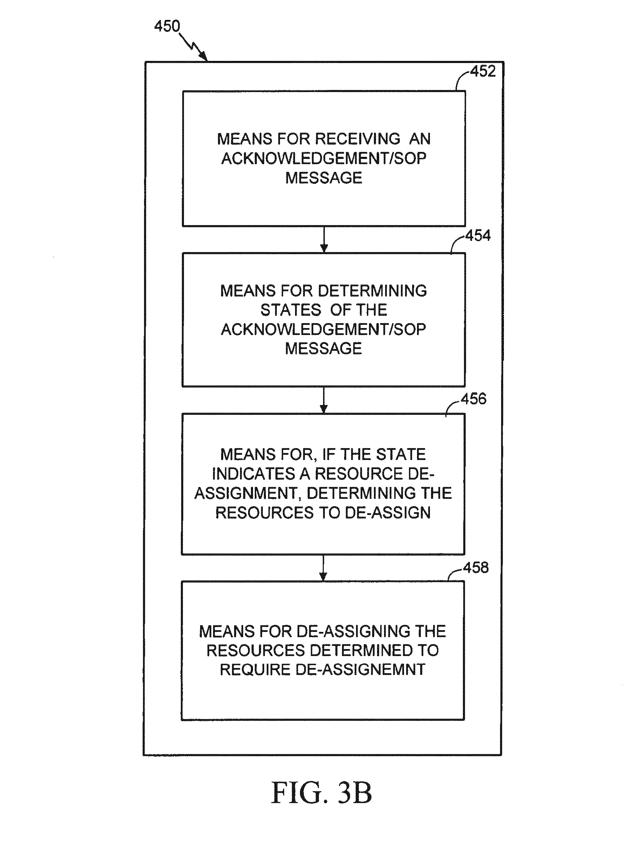

**Fig. 3B** illustrates an apparatus 450 for interpreting resource assignment messages. It is to be appreciated that apparatus 450 is represented as including functional blocks, which can be functional blocks that represent functions implemented by a processor, software, or combination thereof (*e.g*., firmware). Apparatus 450 can be implemented in a terminal and/or another suitable network entity and can include means 452 for receiving an acknowledgement message or a start-of-packet message (SoP) and means 454, which are in communication with means 452, for determining states of the acknowledgement message or the SoP message. As previously noted, the acknowledgement message may include one of four possible states, (1) an off state; (2) an acknowledgement state; (3) an acknowledge and de-assign state and (4) a de-assign state. The SoP message may include one of three possible states, (1) an off state); (2) a SoP state and (3) a de-assignment state. The apparatus 450 additionally includes means 456, which are in communication with means 454, for determining the network resources to de-assign if the state of the acknowledgement message or SoP indicates resource de-assignment. Also, the apparatus 450 includes means 458, which are in communication with means 456, for de-assigning the resources determined to require de-assignment.

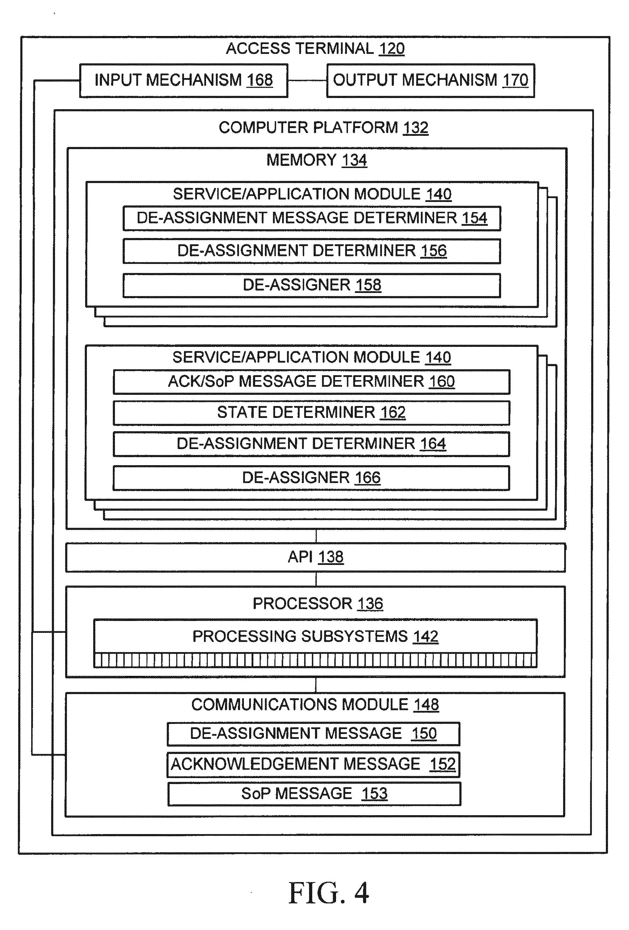

Referring to **Fig. 4****,** according to one aspect, a detailed block diagram representation of an access terminal 120 is depicted. As previously noted, an access terminal can also be called a system, a subscriber unit, a subscriber station, mobile station, mobile, remote station, remote terminal, a wireless access point, wireless terminal, user terminal, user agent, user device, or user equipment. An access terminal may include any type of computerized, communication device, such as a subscriber station, wireless device, cellular telephone, PCS telephone, cordless telephone, a Session Initiation Protocol (SIP) phone, a wireless local loop (WLL) station, a personal digital assistant (PDA), a handheld device having wireless connection capability, and even a separate computer platform that has a wireless communications portal, and which also may have a wired connection to a network or the Internet. The access terminal can be a remote-slave, or other device that does not have an end-user thereof but simply communicates data across the wireless network, such as remote sensors, diagnostic tools, data relays, and the like. The present apparatus and methods can accordingly be performed on any form of wireless access terminal or wireless computer module, including a wireless communication portal, including without limitation, wireless modems, PCMCIA cards, desktop computers or any combination or sub-combination thereof.

The access terminal 120 includes a computer platform 132 that can transmit data across a wireless network, and that can receive and execute routines and applications. Computer platform 132 includes memory 134, which may comprise volatile and nonvolatile memory such as read-only and/or random-access memory (RAM and ROM), EPROM, EEPROM, flash cards, or any memory common to computer platforms. Further, memory 134 may include one or more flash memory cells, or may be any secondary or tertiary storage device, such as magnetic media, optical media, tape, or soft or hard disk.

Further, computer platform 132 also includes processor 136, which may be an application-specific integrated circuit ("ASIC"), or other chipset, processor, logic circuit, or other data processing device. Processor 136 or other processor such as ASIC may, in some but not necessarily all aspects, execute an application programming interface ("API") layer 138 that interfaces with any resident programs, such as service/application modules 140, which requires assignment of network resources, stored in the memory 134 of the access terminal 120. API 138 is typically a runtime environment executing on the respective wireless device. One such runtime environment is Binary Runtime Environment for Wireless^{®} (BREW^{®}) software developed by Qualcomm, Inc., of San Diego, California. Other runtime environments may be utilized that, for example, operate to control the execution of applications on wireless access terminals.

Processor 136 includes various processing subsystems 142 embodied in hardware, firmware, software, and combinations thereof, that enable the functionality of access terminal 120 and the operability of the access terminal on a wireless communication network. For example, processing subsystems 142 allow for initiating and maintaining communications, and exchanging data, with other networked devices. In aspects in which the communication device is defined as a cellular telephone the processor 136 may additionally include one or a combination of processing subsystems 142, such as: sound, non-volatile memory, file system, transmit, receive, searcher, layer 1, layer 2, layer 3, main control, remote procedure, handset, power management, digital signal processor, messaging, call manager, Bluetooth^{®} system, Bluetooth^{®} LPOS, position engine, user interface, sleep, data services, security, authentication, USIM/SIM, voice services, graphics, USB, multimedia such as MPEG, GPRS, etc (all of which are not individually depicted in Fig. 2 for the sake of clarity). For the disclosed aspects, processing subsystems 142 of processor 136 may include any subsystem components that interact with the service/application modules 140. Alternatively, in other aspects, the assignment and de-assignment of network resources function carried out by any or all of the service/application modules 140 may reside in processing subsystems 142.

Computer platform 132 additionally includes communications module 148 embodied in hardware, firmware, software, and combinations thereof, that enables communications among the various components of the access terminal 120, as well as between the access terminal 120 and a wireless communication network. As such, the communication module is operable for receiving de-assignment messages 150 and/or acknowledgement messages 152 and/or start-of-packet (SoP) messages 153.

The memory 134 of computer platform 132 includes one or more service/application modules, such as service/application modules 140 that require access to one or more network resources, such as communications channels and the like. The service/application module 140 may be configured with a de-assignment message determiner 154 operable to determine whether a de-assignment message has been received over a reserved dedicated de-assignment channel. If no de-assignment message is received, based on "sticky" assignment of network resources, the assignment of network resources continues until a de-assignment message is received or until another appropriate action occurs to prompt de-assignment. The service/application module may additionally be configured with a de-assignment determiner 156 operable to determine which resources are being de-assigned based on indicators in the de-assignment message. Also, the service/application module may additionally be configured with a de-assigner 158 operable to de-assign the network resources determined to be required for de-assignment.

Alternatively, one or more service/application modules 140 may be configured with an acknowledgement message or SoP determiner 160 to determine the receipt of an acknowledgement message or SoP, respectively. The service/application module 140 may additionally include a state determiner 162 operable to determine one of four states in the acknowledgement message or one of three states in the SoP message. As previously noted, the acknowledgement states include, (1) an off state, (2) an acknowledgement state; (3) an acknowledgement and de-assign state; and (4) a de-assign state. The SoP message may include one of three possible states, (1) an off state; (2) a SoP state and (3) a de-assignment state. Thus, the service/application module may additionally include a de-assignment determiner 164 operable to determine which network resources to de-assign, if the state of the acknowledgement message or SoP message indicates network resource de-assignment. Additionally, the service/application module may include a de-assigner 166 operable to de-assign the network resources determined to be required for de-assignment.

Additionally, access terminal 120 may include has input mechanism 168 for generating inputs into the access terminal, and output mechanism 170 for generating information for consumption by the user of the access terminal. For example, input mechanism 168 may include a mechanism such as a key or keyboard, a mouse, a touch-screen display, a microphone, etc. In certain aspects, the input mechanisms 170 provides for user input to interface with a service/application module 140. Further, for example, output mechanism 170 may include a display, an audio speaker, a haptic feedback mechanism, etc.

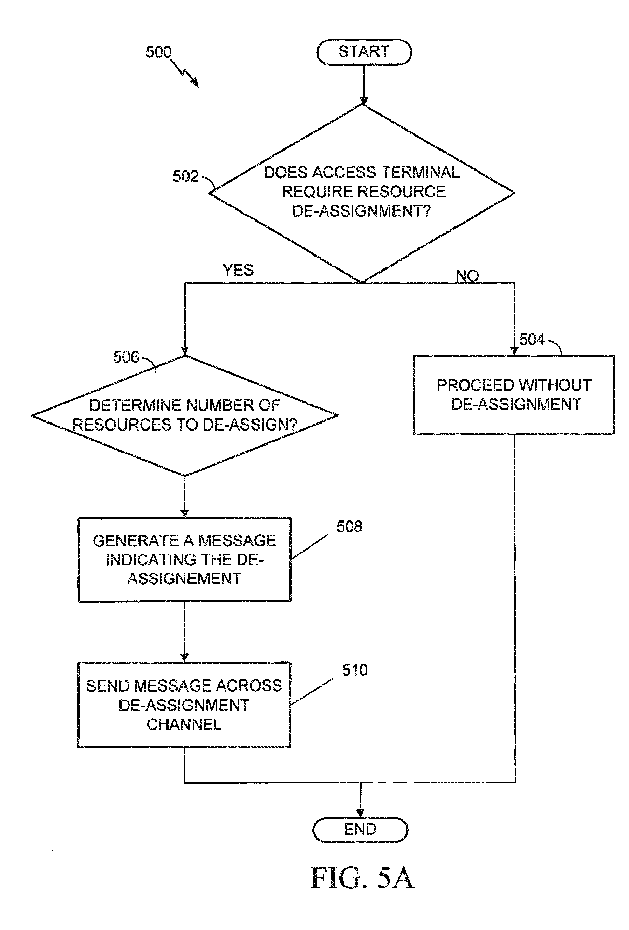

**Fig. 5A** illustrates a method 500 for signaling resource de-assignments. It is to be appreciated that method 500 can be performed by, for example, an access point (*e.g*., a base station 110) and/or any other appropriate network entity. At block 502, a determination is made whether to de-assign a resource for one or more access terminals for future transmissions. The determination may be made on a terminal-by-terminal basis, or in the aggregate for all, or subsets of, the terminals that have assigned resources for the sector, or cell. The resources may be logical resources such as nodes of a channel tree or may be physical resources such as sub-carriers, OFDM symbols, or combinations thereof. In addition, the resources may be Walsh or other orthogonal codes, in the case where such codes are utilized as an additional orthogonality dimension for one or more channel of the wireless communication system.

At block 504, if a de-assignment for an access terminal for some resources is not required, communication, including assignments, other control, and data communication may then proceed without transmitting de-assignments utilizing de-assignment channel resources.

At block 506, if de-assignment is determined for one or more access terminals, then the number of resources that should be de-assigned for each of the one or more access terminals is determined. The number of resources to be de-assigned may be based upon any scheduler optimization and/or other system criteria. In certain aspects, if decremental assignments are not utilized, then this block may be omitted, as of the network resources are to be de-assigned for each terminal where de-assignment is determined.

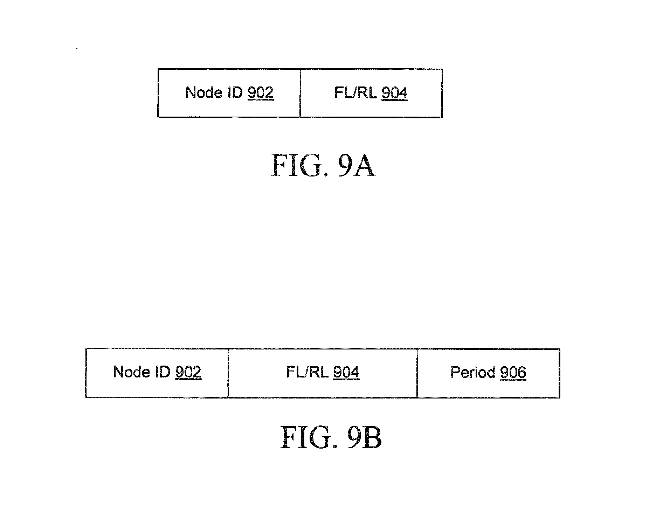

At block 508, a message that indicates the de-assignment(s) is then generated. In some aspects, the message indicating de-assignment may be, but is not limited to, a standalone de-assignment message and, in other aspects, the message may be included in an acknowledgement message or a start-of-packet message. In aspects, in which the message is a standalone de-assignment message the message may include a network resource identifier operable to identify one or more network resources to de-assign and a transmission link identifier identifying a forward transmission link, reverse transmission link or both forward and reverse transmission links associated with the identified one or more network resources. See for example, **Fig. 9A** and the related discussion infra. In alternate aspects, the de-assignment message may include a duration identifier indicating the timing and/or duration of the resource de-assignment. See for example **Fig. 9B** and the related discussion infra.

In those aspects in which the message indicating de-assignment is included within an acknowledgement message, the acknowledgement message may include one of at least four states. The states may include; (1) an off state; (2) an acknowledgement state; (3) and acknowledgement and de-assignment state; and (4) a de-assignment state. See for example **Fig. 11A** and the related discussion infra.

In those aspects in which the message indicating de-assignment is included within a SoP message, the SoP message may include one of at least three states. The states may include; (1) an off state; (2) a SoP state; and (3) a de-assignment state. See for example Fig. 11B and the related discussion infra.

At block 510, the generated message is transmitted over a reserved de-assignment channel. In those aspects in which the message is a de-assignment message, the message may be transmitted over a dedicated and reserved de-assignment channel. In those aspects in which the message is an acknowledgement message, the message may be transmitted over a reserved acknowledgement channel. In those aspects in which message is a SoP message, the message may be transmitted over a reserved SoP channel. The reserved de-assignment/acknowledgement channel may be logical resources that are mapped to physical resources such as subcarriers, OFDM symbols, or combinations of subcarriers and OFDM symbols. In certain aspects, the logical resources used for de-assignment messages may be the same as resources reserved for acknowledgement messages/SoP or resources reserved for both acknowledgement/SoP and de-assignment channel messages. Alternatively, the reserved de-assignment/acknowledgement/SoP channel may be physical resources reserved for transmission of de-assignment messages.

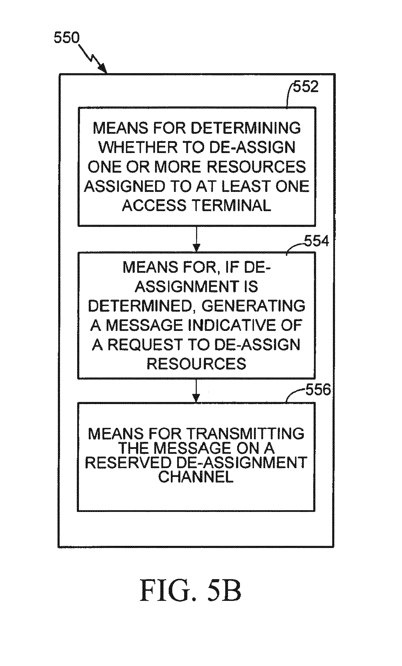

**Fig. 5B** illustrates an apparatus 550 for providing resource de-assignments. It is to be appreciated that apparatus 550 is represented as including functional blocks, which can be functional blocks that represent functions implemented by a processor, software, or combination thereof (*e.g*., firmware). Apparatus 550 can be implemented in an access point (*e.g*., a base station 110) and/or another suitable network entity and can include means 552 for determining whether to de-assign one or more resources assigned to an access terminal for at least two frames is in communication with means 554 for, if de-assignment is determined, generating a message indicative of a request to de-assign resources. The apparatus 550 additionally includes means 556, which are in communication with means 554, for assigning transmission of the message on a reserved de-assignment channel.

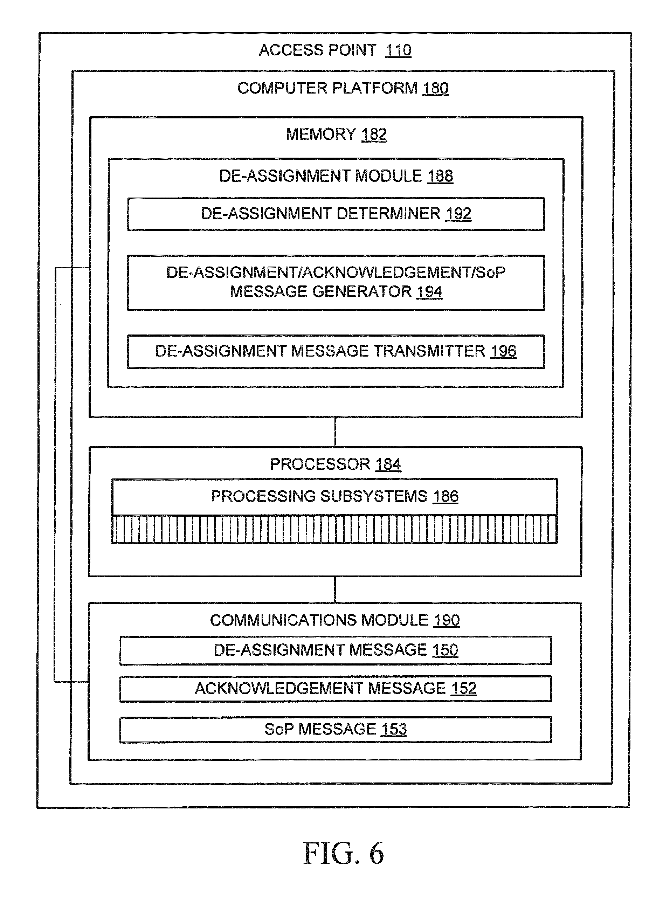

Referring to **Fig. 6****,** according to another aspect, a detailed block diagram is illustrated of an access point 110, which is operable for generating and transmitting de-assignment messages and/or acknowledgement messages with de-assignment functionality, in accordance with present aspects. The access point 110 may comprise at least one of any type of hardware, server, personal computer, mini computer, mainframe computer, or any computing device either special purpose or general computing device. Further, the modules and applications described herein as being operated on or executed by the access point 110 may be executed entirely on access point 110 or alternatively, in other aspects, separate servers or computer devices may work in concert to provide data in usable formats to parties, and/or to provide a separate layer of control in the data flow between the access terminals 120 and the modules and applications executed by access point 110.

The access point 110 includes computer platform 180 that can transmit and receive data across wireless network, and that can execute routines and applications. Computer platform 180 includes a memory 182, which may comprise volatile and nonvolatile memory such as read-only and/or random-access memory (RAM and ROM), EPROM, EEPROM, flash cards, or any memory common to computer platforms. Further, memory 182 may include one or more flash memory cells, or may be any secondary or tertiary storage device, such as magnetic media, optical media, tape, or soft or hard disk.

Further, computer platform 180 also includes a processor 184, which may be an application-specific integrated circuit ("ASIC"), or other chipset, logic circuit, or other data processing device. Processor 184 includes various processing subsystems 186 embodied in hardware, firmware, software, and combinations thereof, that enable the functionality of access point 110 and the operability of the access point on a wireless network. For example, processing subsystems 186 allow for initiating and maintaining communications, and exchanging data, with other networked devices.
For the disclosed aspects, processing subsystems 186 of processor 184 may include any subsystem components that interact with the de-assignment module 188. In alternate aspects, some or all of functionality of the de-assignment module 188 may be included in processing subsystems 186. In the instance in which all of the functionality of the de-assignment module 188 resides in processing subsystems 186, the need for separate de-assignment module 188 may be obviated.

The memory 182 of access point 120 also includes a de-assignment module 188 operable for determining the need to de-assign network resources, generating de-assignment and/or acknowledgement messages with de-assignment and/or a start-of-packet (SoP) messages with de-assignment and initiate communication of the messages to the corresponding access terminals. As such, the de-assignment module 188 may include a de-assignment determiner 192 operable to determine the need to de-assign one or more network resources for at least one access terminal. The de-assignment module 188 may additionally include a de-assignment and/or acknowledgement/SoP message generator 194 operable to generate the appropriate message for de-assignment if the need for de-assignment is determined. As previously noted, the de-assignment message 150 is a standalone message having the sole function of de-assignment of network resources. The acknowledgement message 152 may be configured to define a de-assignment function from amongst the four defined states; (1) off state; (2) acknowledgement state; (3) acknowledge and de-assign state; and (4) de-assignment state. The SoP message 153 may include one of three possible states, (1) an off state; (2) a SoP state and (3) a de-assignment state. The de-assignment module 188 may additionally include a de-assignment message transmitter 196 operable to transmit the de-assignment message 150 across a reserved and dedicated de-assignment channel. Communication of the acknowledgement message 152 or SoP message 153 may not require a dedicated channel and, as such, may be communicated across any available acknowledgement channel or SoP channel, respectively

The computer platform 180 further includes a communications module 190 embodied in hardware, firmware, software, and combinations thereof, that enables communications among the various components of access point 110, as well as between the access point 110 and access terminals 120. The communication module 190 may include the requisite hardware, firmware, software and/or combinations thereof for establishing a wireless communication connection. In accordance with present aspects, the communication module 180 is operable to transmit the de-assignment messages 150 and/or the acknowledgement messages 152 having de-assignment functionality and/or SoP message 153 having de-assignment functionality to one or more access terminals 120.

The formats and message types for de-assignment messages are depicted and discussed with respect to **Figs. 9A, 9B****,** and **11A, 11B****.** It should be noted that in some cases, the de-assignment may be implicit and no de-assignment message be sent on the reserved resources.

The use of both implicit and explicit de-assignments on reserved resources allows for more efficient use of system resources depending on power budgets, user locations in sectors, and/or other factors.

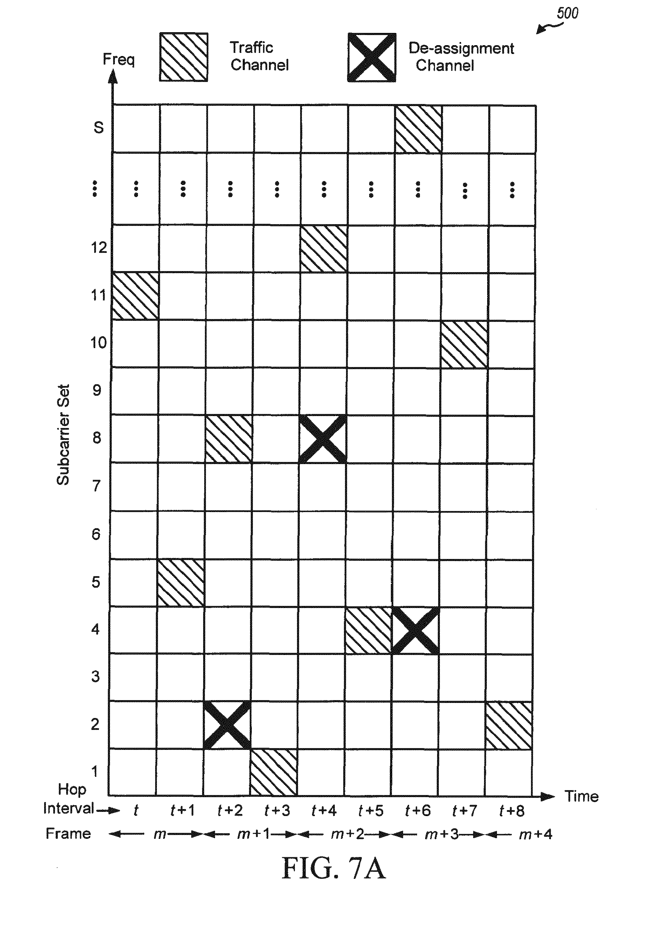

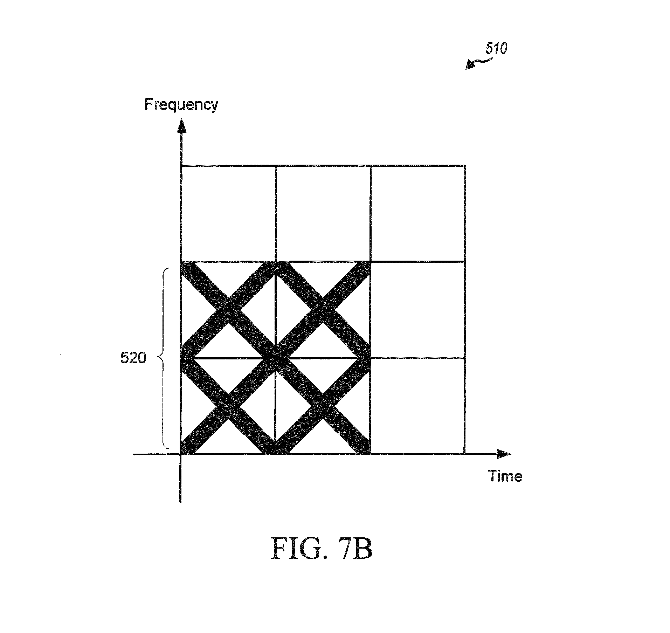

**Figs. 7A** illustrates aspects of a signaling transmission schemes 500 for a de-assignment channel. In one aspect, the de-assignment and/or acknowledgement channel is mapped to one or more subcarrier sets, which are reserved for use by this channel. The traffic channel hops around these resources, i.e., it uses only subcarrier sets that are not allocated to the deassignment and/or acknowledgement channel. As illustrated by diagram 510 in **Fig. 7B****,** a subcarrier set 520 can consist of one or more subcarriers. In one aspect, a subcarrier set 520 can include four subcarriers arranged in a two-by-two square, *e.g*., two adjacent subcarriers in the frequency domain and across two consecutive OFDM symbols in the time domain. A single de-assignment and/or acknowledgement can occupy more than one subcarrier set (*e.g*., it may occupy three subcarrier sets, as illustrated by transmission scheme 500) in order to capture frequency and interference diversity. Moreover, multiple de-assignments and/or acknowledgements may be multiplexed on the same subcarrier set by using orthogonal codes such as Walsh codes. For example, a first de-assignment/acknowledgement may be transmitted using the code [1 1 1 1] on a given subcarrier set, while a second de-assignment/acknowledgement may be transmitted using the code [1 -1 1 -1] on the same subcarrier set. These two de-assignments/acknowledgements can be distinguished at a receiver since they are orthogonal to each other, and since the channel is approximately constant over two consecutive subcarriers and over two consecutive OFDM symbols. Note that some other orthogonal codes, such as exponential codes, may also be used in place of Walsh codes.

In certain aspects, the de-assignment channel is mapped from logical resources to the physical resources allotted for transmission. In general, the de-assignment channel may be mapped to time-frequency blocks in a pseudo-random or deterministic manner, which may be the same or different than the manner utilized to map traffic and/or other control channels. The de-assignment channel may be mapped to different subcarrier sets to achieve frequency diversity, e.g., as shown in **Fig. 7A****.** In certain aspects, the de-assignment channel is pseudo-random with respect to the traffic channels and equally punctures the traffic channels. This may be achieved by hopping the de-assignment channel, hopping the traffic channels, or hopping both the de-assignment channel and the traffic channels. An FH (Frequency Hopping) pattern may indicate mappings for specific time-frequency block(s) for the de-assignment channel in each frame. This FH pattern may be sent to the access terminals or may be known *a priori* by the terminals. In any case, the terminals have knowledge of the time-frequency blocks occupied by the de-assignment channel.

As previously discussed, the de-assignment channel may share logical and physical resources with an acknowledgement channel. Alternatively, acknowledgement messages and/or SoP message may be utilized for de-assignment and as such the above discussion may apply to an acknowledgement channel or a SoP channel, which is also utilized to transmit de-assignment messages. In regard to **Fig. 7A****,** ACK/SoP/de-assignement channel resources can be assigned to different places on 3 different data tiles for diversity purposes. Acknowledgment channel resources can be assigned to four or more subcarrier/time subtiles at each time, and multiple users can be multiplexed onto them. For Code Division Multiplexing (CDM), each user utilizes each of the four sections according to the code.

**Fig. 8** illustrates aspects of a binary channel tree 600 including logical resources for interpreting de-assignment messages. For the aspect shown in **Fig. 8****,** S = 32 subcarrier sets are available for use. A set of traffic channels may be defined with the 32 subcarrier sets. Each traffic channel is assigned a unique channel ID and is mapped to one or more subcarrier sets in each time interval. For example, a traffic channel may be defined for each node in channel tree 600. The traffic channels may be sequentially numbered from top to bottom and from left to right for each tier. The largest traffic channel corresponding to the topmost node is assigned a channel ID of 0 and is mapped to all 32 subcarrier sets. The 32 traffic channels in the lowest tier 1 have channel IDs of 31 through 62 and are called base traffic channels. Each base traffic channel is mapped to one subcarrier set.

The tree structure shown in **Fig. 8** places certain restrictions on the use of the traffic channels for an orthogonal system. For each traffic channel that is assigned, all traffic channels that are subsets (or descendants) of the assigned traffic channel and all traffic channels for which the assigned traffic channel is a subset are restricted. The restricted traffic channels are not used concurrently with the assigned traffic channel so that no two traffic channels use the same subcarrier set at the same time.

In an aspect, a resource is assigned to each traffic channel that is assigned for use. A resource may also be called a sub-channel or some other terminology. A resource includes pertinent resources used to send a message in each frame. For this aspect, the messages for each traffic channel may be sent on the assigned resource. The assigned resources may be signaled to the terminal.

In another aspect, a resource is associated with each of the base traffic channels in the lowest tier of a channel tree. This aspect allows for assignment of the maximum number of traffic channels of the minimum size. A larger traffic channel corresponding to a node above the lowest tier may use (1) the resources for all base traffic channels under the larger traffic channel, (2) the resource for one of the base traffic channels, e.g., the base traffic channel with the lowest channel ID, or (3) the resources for a subset of the base traffic channels under the larger traffic channel. For options (1) and (3) above, a message for the larger traffic channel may be sent using multiple resources to improve the likelihood of correct reception. If multiple data streams are sent in parallel, e.g., using multiple-input multiple-output (MIMO) transmission, then a larger traffic channel with multiple base traffic channels may be assigned for the transmission. The number of base traffic channels is equal to or greater than the number of packets. Each packet may be mapped to a different base traffic channel.

In yet another aspect, a resource is assigned to each packet to be acknowledged. A terminal may be assigned one resource if one packet is sent in a frame. A terminal may be assigned multiple resources if multiple packets are sent in a frame, e.g., using either a larger traffic channel or spatial multiplexing to transmit via multiple antennas.

In aspects including the a reserved de-assignment channel or acknowledgment channel used for both de-assignments and acknowledgements, the logical resources reserved may correspond to a single base node per tier 2, or a portion of the resources of each base node, e.g. N subcarriers, N OFDM symbols, or combinations thereof.

Referring to **Figs. 9A** and **9B****,** aspects of de-assignment messages that may be transmitted on a de-assignment channel are illustrated. In **Fig. 9A****,** an exemplary de-assignment message is shown, which may be transmitted as part of a unicast packet or a multi-cast packet including multiple de-assignment messages. In **Fig. 9A****,** the message includes a first portion 902 that includes the node identifier, or other logical resource identifier, and a second portion 904 indicating whether the de-assignment applies to forward link communication, reverse link communication, or both. The second portion 904 can, to decrease overhead, be a one-bit message indicating that the de-assignment applies to one of the forward link, reverse link or both.

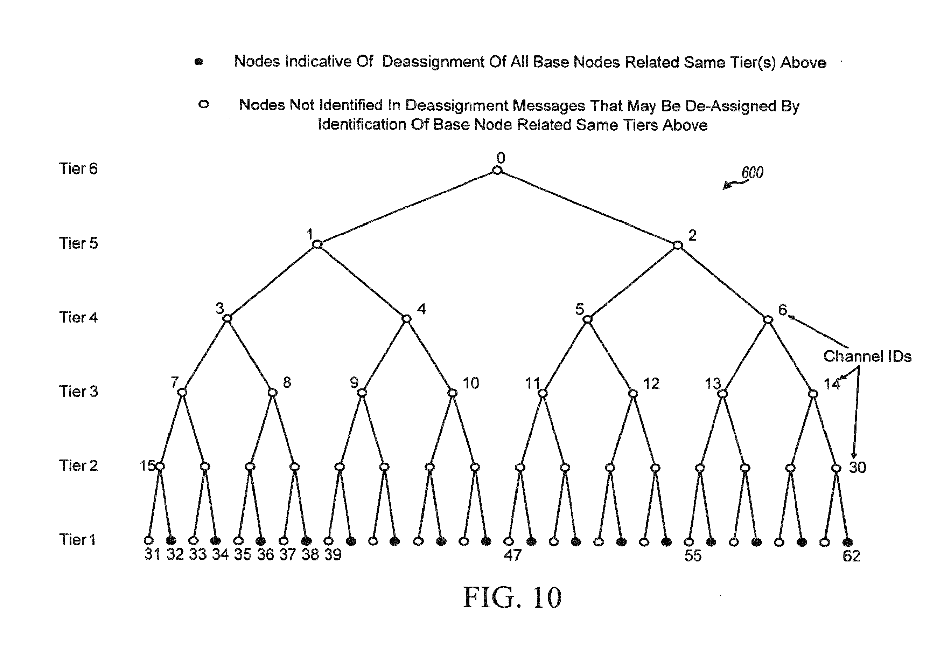

The node or resource identifier may identify multiple logical or physical resources, which are being de-assigned. Alternatively, the node or resource identifier may identify a single node or resource to be de-assigned. In further aspects, the node or resource identifier may identify a single base node, e.g. a node from tier 1 of channel tree 600, of at least two base nodes, and such a de-assignment may be interpreted to de-assign all base nodes associated with a node at a tier above the base node. For example, referring to **Fig. 10****,** shown is another example binary channel tree 600 highlighting nodes that have been identified for de-assignment. For example, if node 32 is identified then the de-assignment may also be interpreted to apply to node 31. In other aspects, the de-assignment may apply to all nodes from tier 3 below, i.e. nodes 31, 33, and 34. Further, the tier and base node may be identified in the first portion, thus allowing improved flexibility as to the amount of resources being de-assigned.

**Fig. 9B** is similar to the message format of **Fig. 9A****,** except that an additional portion 906 indicating the timing and/or duration of the resource de-assignment is provided. This information, if overhead is available, may be useful to provide decremental de-assignments for periods of high loading or other aspects.

It should be noted that while **Fig. 10** depicts the highest node ID of related base nodes being used to de-assign related base nodes of a tier, the reverse may be true and the lowest node ID may be utilized. Further, not all tier 2 or 3 nodes need have de-assignable resources, e.g. only certain portions of the channel tree may have resources available for de-assignment.

**Fig. 11A** illustrates aspects of an acknowledgement message with de-assignment indications that can be transmitted on an acknowledgment channel. Generally, an acknowledgement channel (*e.g*., F-ACKCH) is intended for indicating successful decoding of reverse link data. In addition, in accordance with one aspect, an acknowledgement channel can be simultaneously utilized for reverse link de-assignments as described herein. An acknowledgment message indicating a de-assignment can have four states, S₀ 920, S₁ 922, S₂ 924, and S₃ 926. In certain cases, this message transmitted on the acknowledgement channel allows re-use of the acknowledgement channel for other resources.

In **Fig. 11A****,** S₀ 920 can correspond to an acknowledgement with no de-assignment of resources (*e.g*. an acknowledge state), S₁ 922 can correspond to an acknowledgment with a de-assignment (*e.g*., an acknowledgement and de-assignment state), and S₂ 924 can correspond to a negative acknowledgement (*e.g*., an off state). A further state, S₃ 926, can be a de-assignment message that constitutes an acknowledgement for an erasure sequence or a keep-alive sequence, that is utilized in the case of a sticky assignment that requires the user to transmit a response when it is not transmitting data and/or control messaging on the resources (*e.g*., a de-assignment state). The messages within the S₃ 926 state, which can be erasure sequences or other messages, are provided to fulfill this function, and as such a de-assignment of resources that are being utilized by keep alive messages can be by S₃ 926 messages on the acknowledgement channel.

In a further aspect, the acknowledgement message can be scrambled by an identification assigned to the terminal, e.g. MACID or terminal ID, to guard against error events. In an aspect, S₀ 920, S₁ 922 and S₃ 926 can be transmitted using 3-PSK signaling, although other signaling types can be used. The selection of the bit sequences for the constellation can be based upon maintaining a maximum distance between the off state, S₂ 924, and each of the on-states S₀ 920, S₁ 922 and S₃ 926.

In certain other aspects, in order to identify the resources being de-assigned by an acknowledgement message, a fixed identification can be utilized. De-assignment corresponding to a resource being used by a particular terminal can be sent on the lowest or highest node ID that is part of the resource being used. The de-assignment is being sent on the lowest or highest node ID so that the terminal is aware of where to look for this particular de-assignment message.

**Fig. 11B** illustrates aspects of a start-of-packet (SoP) message with de-assignment indications that can be transmitted on a SoP channel. Generally, a SoP channel (*e.g*., F-SPCH) is intended for indicating the start of a forward link packet. In addition, in accordance with one aspect, a µSoP channel can be utilized to indicate a forward link de-assignment. A SoP message indicating a de-assignment can have three states, S₀ 930, S₁ 932, and S₂ 934. In certain cases, this message transmitted on the SoP channel allows re-use of the SoP channel for other resources.

In **Fig. 11B****,** S₀ 930 can correspond to a SoP with no de-assignment of resources (*e.g.* a SoP state), S₁ 932 can correspond to a negative acknowledgement (*e.g*., an off state). A further state, S₂ 934, can be a de-assignment message that constitutes an acknowledgement for an erasure sequence or a keep-alive sequence, that is utilized in the case of a sticky assignment that requires the user to transmit a response when it is not transmitting data and/or control messaging on the resources (*e.g*., a de-assignment state). The messages within the S₂ 934 state, which can be erasure sequences or other messages, are provided to fulfill this function, and as such a de-assignment of resources that are being utilized by keep alive messages can be by S₂ 934 messages on the SoP channel.

In certain aspects, additional states can be introduced. Further, in accordance with one aspect, states S₀ 930 and S₂ 934 can be transmitted using 3-PSK signaling in a similar manner to ACK states 920, 922, and 926. This can be done, for example, by utilizing 2 of the 3 provided PSK states along with off state S₁ 932. However, it should be appreciated that other signaling types can be used. In an aspect, the acknowledgement messages that can de-assign resources can span three modulation symbols, which as discussed above channelized with the reverse link data channel assigned to the terminal and/or resource, e.g. time-frequency allocation, subband, subcarrier, or the like.

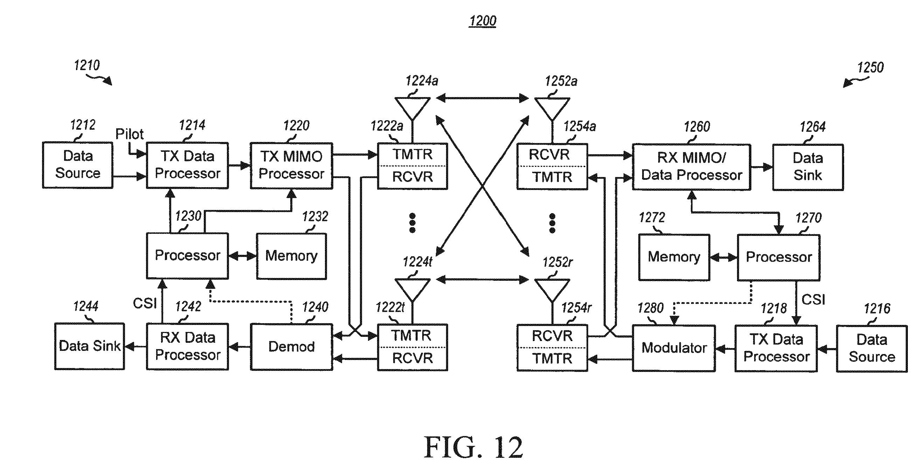

Referring now to **Fig. 12****,** a block diagram illustrating an example wireless communication system 1200 in which one or more aspects described herein can function is provided. In one example, system 1200 is a multiple-input multiple-output (MIMO) system that includes a transmitter system, such as access point/base station 1210 and a receiver system, such as access terminal 1250. It should be appreciated, however, that access point/base station 1210 and/or access terminal 1250 could also be applied to a multi-input single-output system wherein, for example, multiple transmit antennas (*e.g*., on a base station), can transmit one or more symbol streams to a single antenna device (*e.g*., a mobile station). Additionally, it should be appreciated that aspects of access point/base station 1210 and/or access terminal 1250 described herein could be utilized in connection with a single output to single input antenna system.

In accordance with one aspect, traffic data for a number of data streams are provided at access point/base station 1210 from a data source 1212 to a transmit (TX) data processor 1214. In one example, each data stream can then be transmitted *via* a respective transmit antenna 1224. Additionally, TX data processor 1214 can format, code, and interleave traffic data for each data stream based on a particular coding scheme selected for each respective data stream in order to provide coded data. In one example, the coded data for each data stream can then be multiplexed with pilot data using OFDM techniques. The pilot data can be, for example, a known data pattern that is processed in a known manner. Further, the pilot data can be used at access terminal to estimate channel response. Back at access point/base station 1210, the multiplexed pilot and coded data for each data stream can be modulated (*e.g*., symbol mapped) based on a particular modulation scheme (*e.g*., BPSK, QSPK, M-PSK, or M-QAM) selected for each respective data stream in order to provide modulation symbols. In one example, data rate, coding, and modulation for each data stream can be determined by instructions performed on and/or provided by processor 1230.

Next, modulation symbols for all data streams can be provided to a TX processor 1220, which can further process the modulation symbols (*e.g*., for OFDM). TX MIMO processor 1220 can then provides *N_{T}* modulation symbol streams to *N_{T}* transceivers (TMTR) 1222a through 1222t. In one example, each transceiver 1222 can receive and process a respective symbol stream to provide one or more analog signals. Each transceiver 1222 can then further condition (*e.g*., amplify, filter, and upconvert) the analog signals to provide a modulated signal suitable for transmission over a MIMO channel. Accordingly, *N_{T}* modulated signals from transceivers 1222a through 1222t can then be transmitted from *N_{T}* antennas 1224a through 1224t, respectively.

In accordance with another aspect, the transmitted modulated signals can be received at access terminal 1250 by *N_{R}* antennas 1252a through 1252r. The received signal from each antenna 1252 can then be provided to a respective transceiver (RCVR) 1254. In one example, each transceiver 1254 can condition (e.g., filter, amplify, and downconvert) a respective received signal, digitize the conditioned signal to provide samples, and then processes the samples to provide a corresponding "received" symbol stream. An RX MIMO/data processor 1260 can then receive and process the *N_{R}* received symbol streams from *N_{R}* transceivers 1254 based on a particular receiver processing technique to provide *N_{T}* "detected" symbol streams. In one example, each detected symbol stream can include symbols that are estimates of the modulation symbols transmitted for the corresponding data stream. RX processor 1260 can then process each symbol stream at least in part by demodulating, deinterleaving, and decoding each detected symbol stream to recover traffic data for a corresponding data stream. Thus, the processing by RX data processor 1260 can be complementary to that performed by TX MIMO processor 1220 and TX data processor 1214 at transmitter system 1210. RX processor 1260 may additionally provide processed symbol streams to a data sink 1264.

In accordance with one aspect, the channel response estimate generated by RX processor 1260 can be used to perform space/time processing at the receiver, adjust power levels, change modulation rates or schemes, and/or other appropriate actions. Additionally, RX processor 1260 can further estimate channel characteristics such as, for example, signal-to-noise-and-interference ratios (SNRs) of the detected symbol streams. RX processor 1260 can then provide estimated channel characteristics to a processor 1270. In one example, RX processor 1260 and/or processor 1270 can further derive an estimate of the "operating" SNR for the system. Processor 1270 can then provide channel state information (CSI), which can comprise information regarding the communication link and/or the received data stream. This information can include, for example, the operating SNR. The CSI can then be processed by a TX data processor 1218, modulated by a modulator 1280, conditioned by transmitters 1254a through 1254r, and transmitted back to transmitter system 1210. In addition, a data source 1216 at receiver system 1250 may provide additional data to be processed by TX data processor 1218.

Back at access point/base station 1210, the modulated signals from access terminal 1250 can then be received by antennas 1224, conditioned by receivers 1222, demodulated by a demodulator 1240, and processed by a RX data processor 1242 to recover the CSI reported by access terminal 1250. In one example, the reported CSI can then be provided to processor 1230 and used to determine data rates as well as coding and modulation schemes to be used for one or more data streams. The determined coding and modulation schemes can then be provided to transceivers 1222 for quantization and/or use in later transmissions to access terminal 1250. Additionally and/or alternatively, the reported CSI can be used by processor 1230 to generate various controls for TX data processor 1214 and TX MIMO processor 1220. In another example, CSI and/or other information processed by RX data processor 1242 can be provided to a data sink 1244.

In one example, processor 1230 at access point/base station 1210 and processor 1270 at access terminal 1250 direct operation at their respective systems. Additionally, memory 1232 at access point/base station 1210 and memory 1272 at access terminal 1250 can provide storage for program codes and data used by processors 1230 and 1270, respectively. Further, at access terminal 1250, various processing techniques can be used to process the *N_{R}* received signals to detect the *N_{T}* transmitted symbol streams. These receiver processing techniques can include spatial and space-time receiver processing techniques, which can also be referred to as equalization techniques, and/or "successive nulling/equalization and interference cancellation" receiver processing techniques, which can also be referred to as "successive interference cancellation" or "successive cancellation" receiver processing techniques.

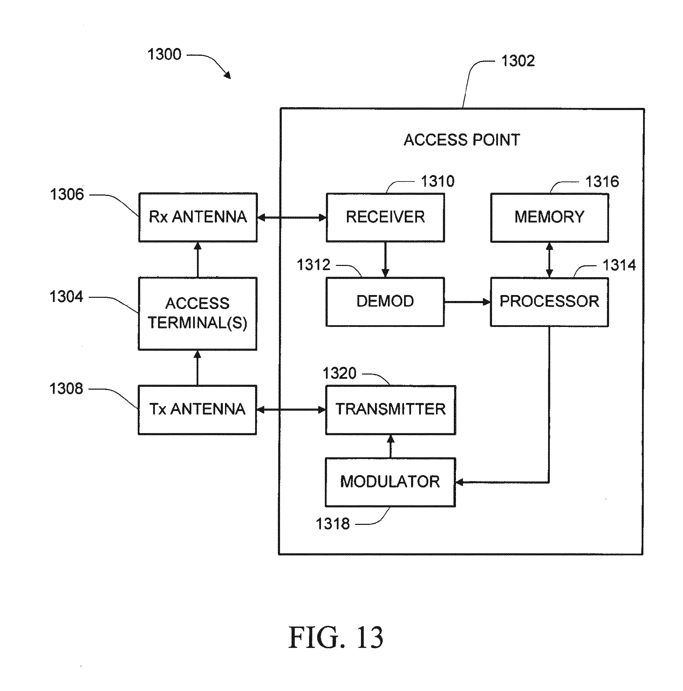

**Fig. 13** is a block diagram of a system 1300 that coordinates generation and transmission of acquisition information in accordance with various aspects described herein. In one example, system 1300 includes a base station or access point 1302. As illustrated, access point 1302 can receive signal(s) from one or more access terminals 1304 via a receive (Rx) antenna 1306 and transmit to the one or more access terminals 1304 via a transmit (Tx) antenna 1308.

Additionally, access point 1302 can comprise a receiver 1310 that receives information from receive antenna 1306. In one example, the receiver 1310 can be operatively associated with a demodulator (Demod) 1312 that demodulates received information. Demodulated symbols can then be analyzed by a processor 1314. Processor 1314 can be coupled to memory 1316, which can store information related to code clusters, access terminal assignments, lookup tables related thereto, unique scrambling sequences, and/or other suitable types of information. In one example, access point 1302 can employ processor 1314 to perform the herein described methodologies, and/or other appropriate methodologies. Access point 1302 can also include a modulator 1318 that can multiplex a signal for transmission by a transmitter 1320 through transmit antenna 1308 to one or more access terminals 1304.

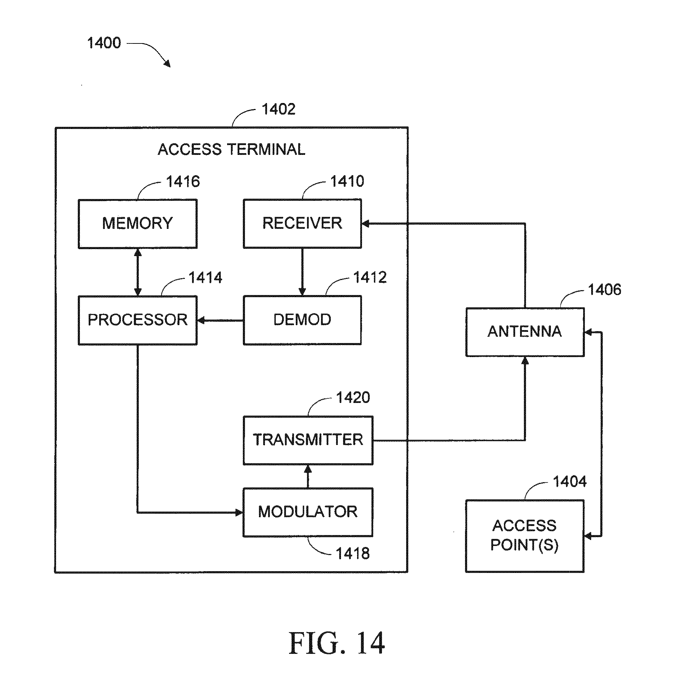

**Fig. 14** is a block diagram of a system 1400 that coordinates signal acquisition in a wireless communication environment in accordance with various aspects described herein. In one example, system 1400 includes an access terminal 1402. As illustrated, access terminal 1402 can receive signal(s) from one or more access points 1404 and transmit to the one or more access points 1404 via an antenna 1408. Additionally, access terminal 1402 can comprise a receiver 1410 that receives information from antenna 1406. In one example, receiver 1410 can be operatively associated with a demodulator (Demod) 1412 that demodulates received information. Demodulated symbols can then be analyzed by a processor 1414. Processor 1414 can be coupled to memory 1416, which can store data and/or program codes related to access terminal 1402. Additionally, access terminal 1402 can employ processor 1414 to perform herein described methodologies and/or other appropriate methodologies. Access terminal 1402 can also include a modulator 1418 that can multiplex a signal for transmission by a transmitter 1420 via antenna 1406 to one or more access points 1404.

It is to be understood that the aspects described herein may be implemented by hardware, software, firmware, middleware, microcode, or any combination thereof. When the systems and/or methods are implemented in software, firmware, middleware or microcode, program code or code segments, they may be stored in a machine-readable medium, such as a storage component. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, *etc.* may be passed, forwarded, or transmitted using any suitable means including memory sharing, message passing, token passing, network transmission, *etc.*

For a software implementation, the techniques described herein may be implemented with modules (*e.g*., procedures, functions, and so on) that perform the functions described herein. The software codes may be stored in memory units and executed by processors. The memory unit may be implemented within the processor or external to the processor, in which case it can be communicatively coupled to the processor via various means as is known in the art.

What has been described above includes examples of one or more aspects. It is, of course, not possible to describe every conceivable combination of components or methodologies for purposes of describing the aforementioned aspects, but one of ordinary skill in the art may recognize that many further combinations and permutations of various aspects are possible. Accordingly, the described aspects are intended to embrace all such alterations, modifications and variations that fall within the scope of the appended claims. Furthermore, to the extent that the term "includes" is used in either the detailed description or the claims, such term is intended to be inclusive in a manner similar to the term "comprising" as "comprising" is interpreted when employed as a transitional word in a claim. Furthermore, the term "or" as used in either the detailed description or the claims is meant to be a "non-exclusive or."
The following numbered clauses are hereby included to give further description of the invention:
1. A method of generating de-assignment messages for a wireless communication device, comprising:
   determining whether to de-assign one or more resources assigned to an access terminal for at least two frames;
   if de-assignment is determined, then generating a message indicative of a request to de-assign resources; and
   transmitting the message on a reserved de-assignment channel.
2. The method of clause 1, wherein generating the message comprises generating the message as an acknowledgement message having at least one of four states.
3. The method of clause 2, wherein generating the message comprises generating the message as an acknowledgement message having at least one of an off state, an acknowledgement state, an acknowledgement and de-assignment state and a de-assignment state.
4. The method of clause 3, wherein transmitting the message comprises one or more of signaling the off state and signaling at least one of the acknowledgement state, the acknowledgement and de-assignment state, and the de-assignment state using a 3-PSK constellation.
5. The method of clause 2, wherein the reserved de-assignment channel comprises a reserved acknowledgement channel.
6. The method of clause 1, wherein generating the message comprises generating the message as a start-of-packet (SOP) message having at least one of three states.
7. The method of clause 6, generating the message as a start-of-packet (SOP) message having at least one of an off state, a SoP state and a de-assignment state.
8. The method of clause 7, wherein transmitting the message comprises one or more of signaling the off state and signaling at least one of the SoP state and the de-assignment state using a 3-PSK constellation.
9. The method of clause 7, wherein generating the message comprises identifying a single logical resource to identify multiple logical resources for de-assignment.
10. The method of clause 1, wherein transmitting the message includes transmitting the message using a plurality of subcarrier sets.
11. The method of clause 1, wherein transmitting the message includes multiplexing a plurality of messages over a plurality of subcarrier sets and transmitting the plurality of messages using the plurality of subcarrier sets.
12. The method of clause 1, wherein the one or more resources are nodes of a channel tree.
13. The method of clause 1, wherein the de-assignment channel resources are assigned solely to de-assignment channel messages.
14. The method of clause 1, generating the message comprises generating the message as a de-assignment message having a network resource identifier operable to identify one or more network resources to de-assign.
15. The method of clause 14, wherein generating the message as a de-assignment message further comprises generating the message as an de-assignment message having a transmission link identifier identifying a forward transmission link, reverse transmission link or both forward and reverse transmission links associated with the identified one or more network resources.
16. The method of clause 1, wherein the one or more resources comprise logical resources.
17. An apparatus for generating de-assignment messages for a wireless communication device, comprising:
   means for determining whether to de-assign one or more resources assigned to an access terminal for at least two frames;
   means for, if de-assignment is determined, generating a message indicative of a request to de-assign resources; and
   means for assigning transmission of the message on a reserved de-assignment channel.
18. A computer-readable medium, comprising:
   code for causing a computer to determine whether to de-assign one or more resources assigned to an access terminal for at least two frames;
   code for causing a computer to generate a message indicative of a request to de-assign resources if de-assignment is determined; and
   code for causing a computer to transmit the message on a de-assignment channel.
19. An integrated circuit that executes computer-executable instructions for generating de-assignment messages for a wireless communication device, the instructions comprising:
   determining whether to de-assign one or more resources assigned to an access terminal for at least two frames;
   if de-assignment is determined, then generating a message indicative of a request to de-assign resources; and
   transmitting the message on a reserved de-assignment channel.
20. An apparatus for generating de-assignment messages for a wireless communication device, comprising:
   a processor configured to determine whether to de-assign one or more resources assigned to an access terminal for at least two frames, generate a message indicative of a request to de-assign resources, and instruct transmission of the message on reserved de-assignment channel resources; and
   a memory coupled to the processor.
21. The apparatus of clause 20, wherein the processor is configured to generate the message as an acknowledgement message having at least one of four states.
22. The apparatus of clause 21, wherein the processor is configured to generate the acknowledgement message having at least one of an off state, an acknowledgement state, an acknowledgement and de-assignment state and a de-assignment state.
23. The apparatus of clause 21, wherein the reserved de-assignment channel resources comprise reserved acknowledgement channel resources.
24. The apparatus of clause 20, wherein the processor is configured to generate the message as a start-of-packet message (SoP) having at least one of three states.
25. The apparatus of clause 24, wherein the processor is configured to generate the acknowledgement message having at least one of an off state, a SoP state, and a de-assignment state.
26. The apparatus of clause 20, wherein the de-assignment channel resources are assigned solely to de-assignment channel messages.
27. The apparatus of clause 20, wherein the one or more resources are nodes of a channel tree.
28. The apparatus of clause 20, wherein the processor is configured to generate the message as a de-assignment message having a network resource identifier operable to identify one or more network resources to de-assign.
29. The apparatus of clause 28, wherein the processor is configured to generate the message as a de-assignment message having a transmission link identifier identifying a forward transmission link, reverse transmission link or both forward and reverse transmission links associated with the identified one or more network resources.
30. A method of interpreting de-assignment messages received over a wireless communication channel, comprising:
   determining whether a de-assignment message, corresponding to a request to de-assign one or more resources assigned to an access terminal for at least two frames, has been received over communication channel resources reserved for de-assignment messages; and
   if the message has been received, determining the resources that are to be de-assigned.
31. The method of clause 30, wherein the communication channel resources reserved for de-assignment messages are communication resources reserved for acknowledgement messages and wherein determining whether comprises determining a state from among at least one of four states of a received acknowledgement message to determine whether a de-assignment message has been received.
32. The method of clause 30, wherein the communication channel resources reserved for de-assignment messages are communication resources reserved for start-of-packet (SoP) messages and wherein determining whether comprises determining a state from among at least one of three states of a received SoP message to determine whether a de-assignment message has been received.
33. The method of clause 30, wherein the one or more resources comprise a logical resource.
34. The method of clause 33, wherein determining the resources identifying a single logical resource is indicative of a request to de-assign multiple logical resources.
35. The method of clause 30, wherein determining the resources comprises determining whether the de-assignment message is indicative of whether to de-assign resources for one of a reverse link, forward link transmission, or forward and reverse link communication.
36. The method of clause 30, wherein the de-assignment channel resources are assigned solely to de-assignment channel messages.
37. The method of clause 30, wherein the one or more resources are nodes of a channel tree.
38. The method of clause 37, wherein determining whether a de-assignment message has been received further comprises accessing a lowest or highest node on the channel tree which corresponds to the one or more resources being de-assigned..
39. An apparatus for interpreting de-assignment messages received over a wireless communication channel, comprising: comprising:
   means for determining whether a de-assignment message, corresponding to a request to de-assign one or more resources assigned to an access terminal for at least two frames, has been received over communication channel resources reserved for de-assignment messages; and
   means for, if the message has been received, determining the resources that are to be de-assigned.
40. A computer-readable medium, comprising:
   code for causing a computer to determine whether a de-assignment message, corresponding to a request to de-assign one or more resources assigned to an access terminal for at least two frames, has been received over communication channel resources reserved for de-assignment messages; and
   code for causing a computer to determine the resources that are to be de-assigned, if the message has been received.
41. An integrated circuit that executes computer-executable instructions for interpreting de-assignment messages received over a wireless communication channel, the instructions comprising:
   determining whether a de-assignment message, corresponding to a request to de-assign one or more resources assigned to an access terminal for at least two frames, has been received over communication channel resources reserved for de-assignment messages; and
   if the message has been received, determining the resources that are to be de-assigned.
42. An apparatus for processing de-assignment messages received over a wireless communication channel, comprising:
   a processor configured to determine whether a de-assignment message, corresponding to a request to de-assign one or more resources assigned to an access terminal for at least two frames, has been received over communication channel resources reserved for de-assignment messages; and
   a memory coupled to the processor.
43. The apparatus of clause 42, wherein the communication channel resources reserved for de-assignment messages are communication resources reserved for acknowledgement messages and wherein the processor is configured to determine a state from among at least four states of a received acknowledgement message to determine whether a de-assignment message has been received.
44. The apparatus of clause 42, wherein the one or more resources comprise a logical resource.
45. The apparatus of clause 44, wherein the processor is configured to determine that a de-assignment message identifying a single logical resource is indicative of a request to de-assign multiple logical resources.
46. The apparatus of clause 42, wherein the processor is configured to determine whether the de-assignment message is indicative of whether to de-assign resources for one of a reverse link, forward link transmission, or forward and reverse link communication.
47. The apparatus of clause 42, wherein the one or more resources are nodes of a channel tree.
48. The apparatus of clause 47, wherein the processor is configured to access a lowest or highest node on the channel tree that corresponds to the one or more resources being de-assigned.

## Claims

1. A method of generating de-assignment messages for a wireless communication device, comprising:
determining (502) whether to de-assign one or more resources assigned to an access terminal for at least two frames;
if de-assignment is determined, then generating (508) a message indicative of a request to de-assign resources; and
transmitting (510) the message on a reserved de-assignment channel.

2. The method of claim 1, wherein generating the message comprises generating the message as an acknowledgement message having at least one of four states, the message having in particular at least one of an off state, an acknowledgement state, an acknowledgement and de-assignment state and a de-assignment state.

3. The method of claim 2, wherein transmitting the message comprises one or more of signaling the off state and signaling at least one of the acknowledgement state, the acknowledgement and de-assignment state, and the de-assignment state using a 3-PSK constellation.

4. The method of claim 2, wherein the reserved de-assignment channel comprises a reserved acknowledgement channel and preferably in which the channel is a dedicated de-assignment channel.

5. The method of claim 1, wherein generating the message comprises generating the message as a start-of-packet, SoP, message having at least one of three states, the message having in particular at least one of an off state, a SoP state and a de-assignment state.

6. An apparatus for generating de-assignment messages for a wireless communication device, comprising:
means for determining (552) whether to de-assign one or more resources assigned to an access terminal for at least two frames;
means for, if de-assignment is determined, generating a message (554) indicative of a request to de-assign resources; and
means for assigning transmission (556) of the message on a reserved de-assignment channel.

7. An apparatus of claim 6, wherein the message has an additional portion (906) indicating the duration of the resource de-assignment.

8. A method of interpreting de-assignment messages received over a wireless communication channel, comprising:
determining (302) whether a de-assignment message, corresponding to a request to de-assign one or more resources assigned to an access terminal for at least two frames, has been received over communication channel resources reserved for de-assignment messages; and
if the message has been received, determining (306) the resources that are to be de-assigned.

9. The method of claim 8, wherein the communication channel resources reserved for de-assignment messages are communication resources reserved for acknowledgement messages and wherein determining whether comprises determining a state from among at least one of four states of a received acknowledgement message to determine whether a de-assignment message has been received and preferably wherein the communication channel resources reserved for de-assignment messages are communication resources reserved for start-of-packet, SoP, messages and wherein determining whether comprises determining a state from among at least one of three states of a received SoP message to determine whether a de-assignment message has been received.

10. The method of claim 8, wherein the one or more resources comprise a logical resource and preferably wherein determining the resources identifying a single logical resource is indicative of a request to de-assign multiple logical resources.

11. The method of claim 8, wherein determining the resources comprises determining whether the de-assignment message is indicative of whether to de-assign resources for one of a reverse link, forward link transmission, or forward and reverse link communication and preferably wherein the de-assignment channel resources are assigned solely to de-assignment channel messages.

12. The method of claim 8, wherein the one or more resources are nodes of a channel tree and preferably wherein determining whether a de-assignment message has been received further comprises accessing a lowest or highest node on the channel tree which corresponds to the one or more resources being de-assigned..

13. An apparatus for interpreting de-assignment messages received over a wireless communication channel, comprising: comprising:
means for determining (352) whether a de-assignment message, corresponding to a request to de-assign one or more resources assigned to an access terminal for at least two frames, has been received over communication channel resources reserved for de-assignment messages; and
means for (354), if the message has been received, determining the resources that are to be de-assigned.

14. A computer-readable medium, comprising:
code for causing a computer to perform the method of any one of claims 1 to 5 or 7 to 12.

15. An integrated circuit that executes computer-executable instructions for interpreting de-assignment messages received over a wireless communication channel, the instructions performing the method of any one of claims 1 to 5 or 7 to 12.
